# EUROPEAN PATENT SPECIFICATION

(11) **EP 4 375 626 B1**
(45) Date of publication and mention of the grant of the patent: **16.09.2026**
(21) Application number: 22383136.3
(22) Date of filing: 25.11.2022
(51) Int. Cl.: G01G 19/393

(54) **A METHOD AND SYSTEM FOR GATHERING A NUMBER OF ARTICLES WITH A TARGET TOTAL WEIGHT**
VERFAHREN UND SYSTEM ZUM SAMMELN EINER ANZAHL VON ARTIKELN MIT EINEM ZIELGESAMTGEWICHT
PROCÉDÉ ET SYSTÈME POUR RASSEMBLER UN CERTAIN NOMBRE D'ARTICLES AVEC UN POIDS TOTAL CIBLE

(43) Date of publication of application: 29.05.2024
(73) Proprietor: Nexes Control Design Engineering S.L.U., 08970 Sant Joan Despi (ES)
(72) Inventor: JORGE ALESANCO, Cristobal, 08012 BARCELONA (ES)
(74) Representative: Sugrañes, S.L.P.

(56) References cited:
- EP-A1- 0 640 814
- EP-A1- 2 993 449

## Description

### Technical field of the invention

The present invention relates to a method and system for gathering a number of articles with a target total weight, for example, within a specified range. The invention can be used in packaging processes and is of particular interest for serving a container with a plurality of articles of different individual weight but the gathering weight of which is acceptably close to a target weight. The invention also relates to a combination scale comprising or using the system of the invention.

### Background of the invention

In the particular field of packaging articles in containers, there is a recurring need to gather a number of articles with different individual weights so that said gathering has a total weight within a specified range. The specified range can be a very narrow range, in practice a target weight value with a very small tolerance.

This need becomes more evident when the articles to be packaged are discrete, for example, fruit and vegetable products, which by nature have individual weight variability. If a number of discrete articles the gathering of which has a target weight is to be gathered, a widely known solution is to arrange a plurality of said articles and find a combination of these the sum of weights of which is that of the target weight.

This gives rise to what are known as combination weighers or combination scales.

In the particular field of packaging, the combination weighers or combination scales have been developing and perfecting for many years.

In packaging processes that require a high number of operations per unit of time in combination weighers or combination scales, the articles are supplied by the effect of gravity to a plurality of concentrically distributed weighing units in order to obtain measured weight values in articles in each weighing unit; selecting one of the combinations of said weight values such that their sum coincides with the target weight, or is as close as possible to the target weight; and unloading by the effect of gravity to a central collector the articles contained in the weighing units that are part of the selected combination.

This particular concentric arrangement of the weighing units entails several drawbacks.

Among these, is the fact that the more precision is required, the greater the number of weighing units should be to find a combination of weights that meets the target and since the distribution of these is concentrical, this leads to scales that occupy more space horizontally, but also to scales that take up more space vertically.

And it is that in order for the central collector to quickly and efficiently concentrate the articles at an unloading point, such as an upper mouth of a bag, it will be necessary for this collector to have a minimum slope; and the greater the number of weighing units, due to their concentric arrangement, the further apart the weighing units that are part of a combination may be and, consequently, the greater the vertical travel required by the collector to concentrate the articles unloaded from these weighing units if this minimum collector slope principle is to be met at the same time.

This circumstance is complicated when the nature of the products is such that they can agglomerate or crowd in the collector, forming plugs and/or they do not slide properly through the collector.

With the dual purpose of increasing the number of possible combinations without increasing the number of weighing units and increasing the speed of operation over time, multideck or multilevel combination scales arose. For example, having a plurality of preload drawers; a plurality of weighing units under the preload drawers; and a plurality of reserve drawers below the weighing units, not only the articles contained in the weighing units being able to form part of the combination but also the articles already weighed and unloaded in the reserve drawers.

Naturally, this leads to increasing the vertical dimensions of the combination scales and to the appearance of other problems. For example, the successive loading and unloading of articles between drawers and/or weighing units at different levels can cause defects in the articles; increases the cost of the scale that requires more movable parts and more maintenance, requires more complex programming systems and alters the working conditions, for example, due to increased noise.

There is another added drawback that stands out, which is cleaning. There are combination scales that must handle products that can leave residues as they pass through the weighing drawers and/or units and this requires having to carry out arduous cleaning operations of the combination scales, with many nooks and crannies and spaces that are susceptible to becoming contaminated including spaces located at levels that are not within the reach of an operator, and that require a lot of time for their correct execution during which the scales do not work.

Other drawbacks must be added, in this case related to the precision of the weighing in the weighing units, which use weighing solutions that use load cells or various gauges that require a stabilisation time between two consecutive weighings to return an accurate weight measurement.

Patent document EP0640814, disclosed in 1995, is an example of a multilevel combination scale as described above. Despite the age of this disclosure, the combination scales used in packaging processes continue to implement the same technical principle and constructively do not differ too much from each other, in most cases focussing improvements on internal logic or in the operation software that governs the loadings and unloadings and the combinatorial logics that resolve the best combination of weights.

Examples of recent proposals for combination scales are found, for example, in patent documents EP3236220; EP1832856 and EP3617668.

In other packaging processes that require fewer operations per unit of time, linear combination weighers can also be used, i.e., in which the weighing units are placed next to each other and facing a common collector. Articles can be manually loaded to weighing units, and only those that are part of a combination will deliver the loaded articles to the collector.

Document EP2993449A1 discloses a balance comprising a housing and a weighing pan that is held in a predetermined free-floating and constant position above the balance housing during use, through electromagnetic weighing mechanisms not located directly below the weighing pan. This balance can be used in conjunction with a conveyor belt without affecting its accuracy, as two groups of electronic weighing mechanisms can be arranged opposite each other, allowing the conveyor belt to be positioned between them, so the weighing pan is not affected by the vibrations of the conveyor belt.

### Description of the invention

To provide a solution to the aforementioned drawbacks, a method according to claim 1 is disclosed.

It is a method for gathering a number of articles with a target total weight, the method comprising supplying articles to a plurality of weighing units in order to obtain measured weight values in articles in each weighing unit, performing combinatorial calculations on the basis of the measured weight values to select a combination of these measured weight values the sum of which coincides with the target weight; and gathering the articles of the weighing units the measured weight values of which are part of the combination.

The method is characterised in that the weighing units are conveyor elements movable by levitation with respect to a substantially flat work surface, capable of following different trajectories between at least two areas of the work surface, one of which is a loading area, in which the articles are supplied to the conveyor elements; and another is an unloading area, in which the conveyor elements that are part of the combination dump their contents into at least one article collector.

According to another aspect of the invention, a system particularly suited to implement the method of claim 1 is provided.

The system comprises a supplier of articles to a plurality of weighing units to obtain measured weight values on articles in each weighing unit; a control unit, programmed to perform combinatorial calculations on the basis of the measured weight values and to select a combination of these measured weight values the sum of which coincides with the target weight; and at least one collector of the articles supplied to the weighing units the measured weight values of which are part of the combination.

In essence, this system is characterised in that the weighing units are conveyor elements movable by levitation with respect to a work surface, capable of following different trajectories between at least two areas of the work surface, one of which is a loading area, in which the supplier supplies the articles to the conveyor elements; and another is an unloading area, in which the conveyor elements that are part of the combination dump their contents into the at least one article collector.

The invention is assisted by known levitation transport proposals, as will be explained in greater detail later, giving them a use that is not known to date, such as their involvement in associative weighing and more specifically for the implementation of a combination scale.

In an interesting embodiment of the invention, the work surface is a substantially flat and horizontal surface, resulting in a method, as will be understood from the discussion that follows, which can be carried out on a plane at a height level easily accessible by an operator; easily cleanable; and easily customisable, i.e., being able to incorporate as many weighing units, that is, conveyor elements, as required by the production process without increasing the height dimension of the system.

Other variants and preferred embodiments of the invention are described in the dependent claims.

The work surface being a horizontal or substantially horizontal surface, it is contemplated that the conveyor elements comprise a levitating base and at least one container carried by the levitating base and suitable for loading articles by the supplier in the loading area, the system being provided with means for confluencing said articles in the at least one article collector in the unloading area.

The means for confluencing the articles can comprise, in the unloading area, a movable portion of the work surface.

The at least one container that the levitating bases carry can be a tipper.

In this case, in a variant, the means for confluencing the articles comprise, in the unloading area, at least one tipping mechanism that, by means of a mechanical coupling with tippers, is capable of ensuring their tipping and the confluence of the articles contained in the at least one article collector.

In a variant, the tipping mechanism and the tippers comprise complementary means for mutual coupling, the tipping mechanism being configured to be coupled to tippers of more than one conveyor element at the same time, being thus capable of ensuring the tipping and confluence in the article collector of the articles contained in the tippers of more than one conveyor element.

The complementary means of mutual coupling can comprise in the tippers, a coupling protuberance; and in the tipping mechanism, a rail oriented parallel to the work surface and solidly attached to an arm that rotates around an axle oriented parallel to said work surface between at least two positions. One is a coupling position A, which arranges the rail within reach of the coupling protuberances of the tippers, being able to be inserted into the rail, through a first end thereof, tipper coupling protuberances of more than one conveyor element that move above the work surface; and another is a tipping position B, which dumps the tippers the protuberance of which is inserted into the rail.

It is provided that the work surface comprises at least one unloading port, formed by an edge area of the work surface in which several conveyor elements that form part of a combination can gather and from which they can confluence the load in articles of their containers to an article collector.

The edge area can be an outer edge area, that is, of the outer perimeter or contour, of the work surface, or an inner edge area, that is, of the perimeter or contour of an opening in the work surface.

In a variant, the at least one article collector comprises a hopper.

In a variant, the work surface comprises a substantially coplanar selection area, dimensioned for the spatial organisation, on this selection area of a number N of conveyor elements greater than the number n of conveyor elements that are part of the combination, the control unit being programmed to organise the transit of the conveyor elements in a loop from the loading area to the selection area; from the selection area to the unloading area; and from the unloading area back to the loading area.

The spatial organisation in the selection area is, in one embodiment, a matrix organisation in which waiting rows, the column positions of which can be occupied by conveyor elements waiting to be selected to be part of a combination; alternate with transit rows, to which conveyor elements selected to be part of a combination and which were waiting located in waiting rows adjacent to a transit row may first be transversely moved, to then move said selected conveyor elements along said transit row, in the direction of the unloading area.

The express object of the invention is a combination weigher comprising a system according to the invention.

The terms "a" and "one" are used herein to refer to one or more than one (i.e., to at least one) of the grammatical object of the term. By way of example, "an element" means one or more elements.

Throughout the specification, the phrase "which comprises", or variations such as "comprises" or "comprising" a certain element or action, will be understood to imply the inclusion of these, but not the exclusion of any other element or action.

### Brief description of the drawings

Non-limiting embodiments of the present invention are shown in the drawings. Specifically:
Fig. 1 is a perspective view of a system according to the invention;
Fig. 2 is a schematic plan view of the work surface of the system of Fig. 1;
Figs. 3 and 4 are respective side and plan views of the system represented in Fig. 1;
Figs. 5 and 6 are respective side and perspective views of a conveyor element of the system of Fig. 1; and
Fig. 7 is a cross-sectional view of the system according to the section plane AA of Fig. 5.

### Detailed description of an embodiment

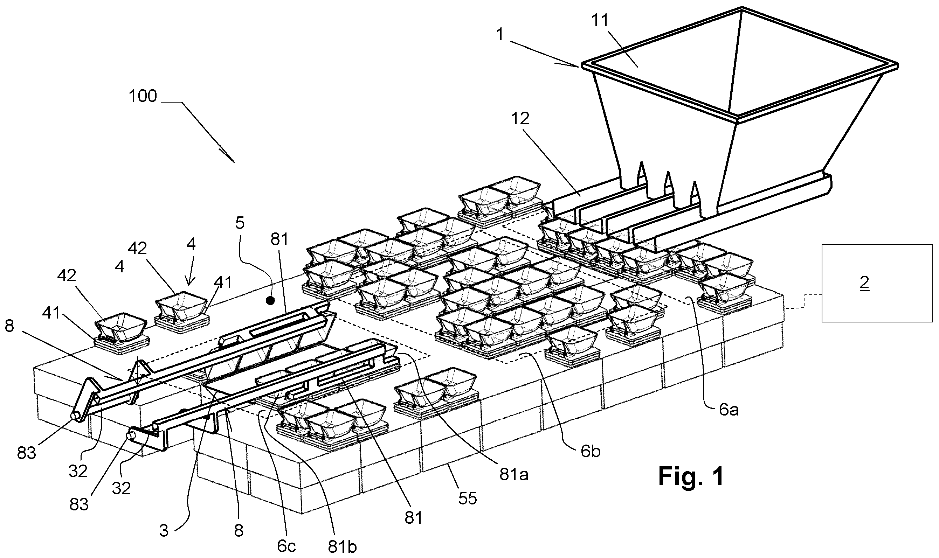

Fig. 1 illustrates a system 100 for gathering a number of articles with a total weight within a specified range. The system 100 is suitable for being part of a production process, specifically a packaging process. More specifically, the system 100 implements a combination weigher.

According to this embodiment shown, the system 100 comprises a table 55 of sorts that defines a work surface 5, in a substantially horizontal plane, above which a plurality of conveyor elements 4 are arranged capable of movement, movable by levitation with respect to the work surface 5.

In the example, the conveyor elements 4 comprise a levitating base 41 and a container 42 carried by the levitating base 41 and suitable for allowing articles to be loaded therein.

Apart from this example, in other variants not shown, it is contemplated that a levitating base 41 can carry more than one container, identical or different.

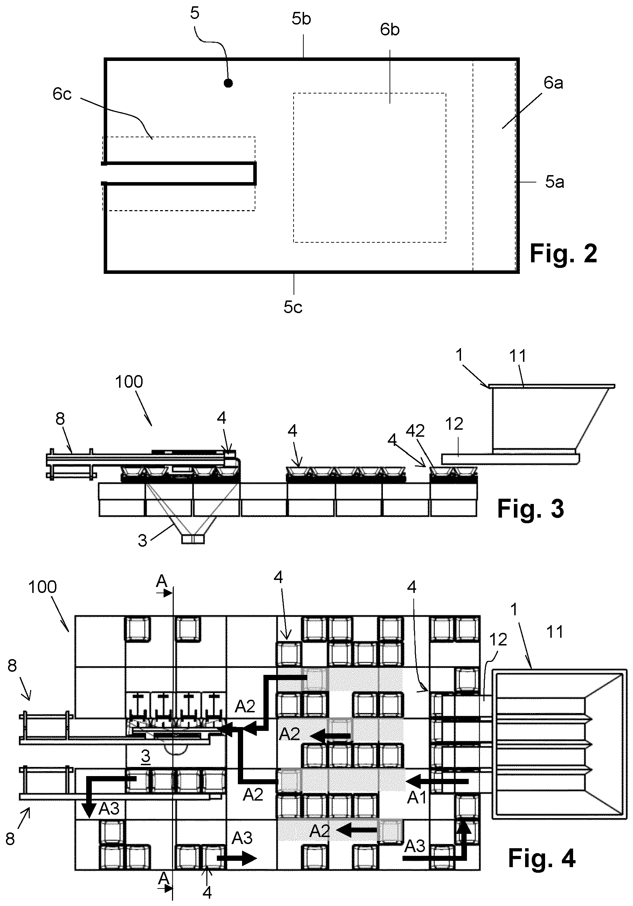

Conveyor elements 4 of the system 100 will move above the work surface 5 in a loop travel that will comprise passing these conveyor elements 4 through a loading area 6a, wherein articles will be loaded into the associated containers 42; a selection area 6b, in which N conveyor elements 4 with the containers 42 loaded with articles will remain waiting to be selected; and an unloading area 6c, in which n selected conveyor elements 4 will gather around, or in the vicinity of, an article collector 3 so that its containers 42 can dump the loaded articles therein. Fig. 2 serves to roughly show the organisation on the work surface 5 of these loading 6a, selection 6b and unloading 6c areas.

The system 100 is designed to be able to perform the function of a combination weigher or scale. To this end, the conveyor elements 4 each perform the function of a weighing unit in order to obtain measured weight values of the articles loaded in their respective containers 42 and to be able to perform combinatorial calculations based on the measured weight values to select a combination of n conveyor elements 4 the sum of the measured weight values in loaded articles of which coincides with a target weight. In the system 100, the N conveyor elements 4 candidates to be part of this combination wait in the waiting area 6b of the work surface 5. The combinatorial calculations, with well-known techniques, are carried out by a control unit 2, programmed for this purpose.

As noted, the conveyor elements 4, with the associated containers 42, are movable along the work surface 5 by levitation.

Various examples of technical proposals that make it possible to govern the movement of conveyor elements along a work surface by levitation are described, by way of example only, in patent documents WO2021250077 for "Method for controlling a planar drive system and planar drive system"; EP3868009 for "A device and a method for path planning for a mover of a drive device"; or EP3818625 for "Method for moving a rotor in a planar drive system".

Examples of commercial products with movable conveyor elements along a work surface by levitation are Acopos 6D from B&R Industrial Automation; Xplanar by Beckhoff Automation; or Xbots by Panar Motor.

It should be noted that the techniques for moving conveyor elements along a work surface by levitation are techniques that give the conveyor elements more than two degrees of freedom, since a spin movement can also be transmitted thereto (to rotate on themselves), for inclination with respect to the work surface or for approaching and moving away therefrom.

In one manner of applying these technical proposals to the case, the levitating base 41 of each conveyor element 4 determines a substantially flat lower face that faces the work surface 5, elevated at a certain distance above same without contacting it.

Although in the example the levitating bases 41 have a square rectangular plan shape, other shapes and configurations are however possible, including those that are closed on themselves leaving a central passage.

Although in the example all the levitating bases 41 are of similar dimensions and the containers 42 have a plan shape similar to that of these levitating bases, other shapes and configurations are also possible including those in which the system combines levitating bases of different dimensions and/or shapes and/or carry containers of different capacities, with the purpose that conveyor elements capable of loading a number of articles with a higher weight and conveyor elements capable of loading a number of articles with a lower weight are part of the combination. This last modality allows, for example, counting for the combination with conveyor elements the weight in articles of which is of the order of magnitude of the target weight and with conveyor elements the weight in articles of which is of an order of magnitude lower than the target weight, to make a fine adjustment of the combined weight that meets the target weight.

The system 100 may, in any case, implement a known solution of the type that ensures a magnetic-inductive interaction between the table 55 that defines the work surface 5 and each levitating base 41 of a conveyor element 4, to produce the levitation movement of the conveyor elements 4, loaded or unloaded, along and above the work surface 5.

A magnetic-inductive interaction as described above can be obtained by providing the table with a plurality of individually excitable solenoids embedded in the table 55 and distributed along the work surface 5, in particular embedded in an upper portion of the table 55 next to the work surface 5; and by providing the levitating bases 41 with embedded permanent magnets such that the solenoids and permanent magnets are magnetically coupled to each other to interact magnetically and cause the levitation and movement of the conveyor elements 4 relative to the work surface 5.

In more detail, the solenoids are polarised, in use, with a given current, to produce (in known manner) a magnetic field and cause the conveyor elements 4 carrying the respective permanent magnets to magnetically couple with the solenoids and therefore, to levitate and move on the work surface 5.

Moreover, as far as weighing is concerned, the system 100 of the invention takes advantage of the features offered by known techniques of transportation by levitation, specifically with regard to correlating a parameter of the magnetic-inductive coupling between the table 55 and each levitating base 41 of a conveyor element 4 not only to produce a levitating movement of the conveyor element 4 along the work surface 5 but also to estimate the weight of the article or articles loaded in the container 42 or containers of the conveyor element 4.

By way of example only, since it is necessary to excite the table solenoids with a given nominal current in order to maintain a conveyor element 4 at a predefined distance from the work surface other than zero, it is possible to measure the variation of the given current along a loading operation or after a loading operation has been carried out to correlate this variation with the mass of the article or articles loaded on the conveyor element 4. The variation of the given current will be, in particular, an increase to counteract the increasing traction action exerted by gravity on the mass of the assembly defined by the transport element 4 and its load if care is taken to maintain the predefined distance between the conveyor element and the work surface.

Several examples of proposals that take advantage of the benefits offered by known techniques of transportation by levitation, specifically to carry out weight measurements of a load deposited on the conveyor elements, are described in patent documents WO2021115559; EP3621902; EP3440441 and WO2022184517.

Returning to the particularities of the system 100 that serves as an example, Fig. 2 serves to show that the work surface 5 has an essentially rectangular plan shape the perimeter of which is defined by a first straight short side 5a and by two straight and orthogonal longer sides 5b and 5c with respect to the first short side 5a.

A supplier 1 of articles is located on the first short side 5a (see Figs. 1, 3 and 4). The article supplier 1 is exemplified in the form of a supplier 1 comprising a bulk article store 11 from which a number of four article supply channels 12 start, the distal ends of which reach to be located on the work surface 5, in the loading area 6a, below which respective conveyor elements 4 can be arranged to receive an article or a series of articles in their containers 42.

The number of storages 11 can vary, as well as the number of supply channels 12 per storage.

Likewise, it is contemplated that the supplier 1 incorporates dispensing means for the articles that may be counting means, timing means or of another kind to enable and disable the supply of articles through the supply channels 12 to the conveyor elements 4. The invention 100 is compatible with those known technical solutions for at least regulating and/or controlling, in number or in dispensing time, the number of articles served by a supply channel 12.

In the example, the supply channels 12 are straight and extend in a direction orthogonal to the first short side 5a of the work surface 5. In the example, the work surface 5 extends sufficiently so that the conveyor elements 4 can be successively arranged under the distal ends of the supply channels 12 following an advance movement in a direction parallel with respect to the larger sides 5b and 5c from the work surface 5 and in a direction towards the selection area 6b referred to above. This direction of advance is marked with the arrow A1 in Fig. 4.

In the system 100, the selection area 6b is dimensioned for the spatial organisation on same of a number N of conveyor elements 4 greater than the number n of conveyor elements 4 that will be part of the combination the total weight in articles of which coincides with the target weight. We will refer to this spatial organisation in more detail later.

In the system 100, the control unit 2 is programmed with instructions to at least organise the transit of the conveyor elements 4 from the loading area 6a to the selection area 6b; to carry out, as already mentioned, the combinatorial calculations that give rise to a combination of conveyor elements 4 located in the selection area 6b; to organise the transit of the conveyor elements 4 that are part of the combination from the selection area 6b to the unloading area 6c, in particular until they gather around, or in the immediate vicinity of, the collector 3, which is marked with arrows A2 in Fig. 4; to ensure the dumping of the articles loaded in the containers 42 of said conveyor elements 4 in the collector 3; and to organise the transit of the conveyor elements 4 from the unloading area 6c back to the loading area 6a, which is marked with arrows A3 in Fig. 4.

In the exemplary system 100, the spatial organisation of the loaded conveyor elements 4 in the selection area 6b is a matrix organisation in which waiting rows, the column positions of which can be occupied by conveyor elements 4 waiting to be selected for a combination; alternate wirh transit rows, to which conveyor elements 4 selected for a combination, and which were located in adjacent waiting rows, can first move transversely, in order to be able to move later along said transit row in the direction of the unloading area 6c. The transit rows have been highlighted in shading in Figure 4.

As regards the unloading area 6c, it is an area where conveyor elements 4 of a combination can be arranged around, or in the vicinity of, a collector 3, in the example in the form of a hopper that opens superiorly to the work surface 5.

The shape and arrangement of the hopper with respect to the work surface 5 may vary from that shown.

For example, in a variant not shown, the hopper can be arranged inside an outer perimeter of the table 55 that defines the work surface 5, that is, the hopper being surrounded by the work surface 5.

In another variant not shown, the hopper can be arranged on one side of the table 55, with an upper edge attached to an outer perimeter of the table 55 that defines the work surface 5.

In another variant, the system has more than one hopper.

In other variants, the collector is different from a hopper and may be, by way of example only, a conveyor belt.

In the example, the outer perimeter of the table 55 that defines the work surface 5, in the unloading area 6c, has a rectangular plan recess into which the hopper is embedded or, in any case, into which the hopper opens. The upper opening of the hopper can be equal to that of this recess or be larger, for example, extending beyond the aforementioned rectangular recess.

More specifically, in the example, the work surface 5 is symmetrical with respect to a longitudinal axis such that the recess of the table 55 is equidistant from the longer sides 5b and 5c of the work surface 5. The outer perimeter of the table 55 that defines the work surface 5, in the unloading area 6c, is in this case defined by a U-shaped sector, which offers two unloading ports, parallel and straight, that can be used in an alternate manner by combinations of n conveyor elements 4 of two successive operations of combined weighing, to unload the loaded articles.

This particular shape of the work surface 5 makes it possible to increase the number of unloading operations per unit of time, since while a number n of conveyor elements 4 are unloading articles occupying the space of a first unloading port; another number n of conveyor elements, which are part of the following combination, will be able to move towards and/or align in the second unloading port. This particular situation is that which is actually illustrated in Figs. 1 and 4.

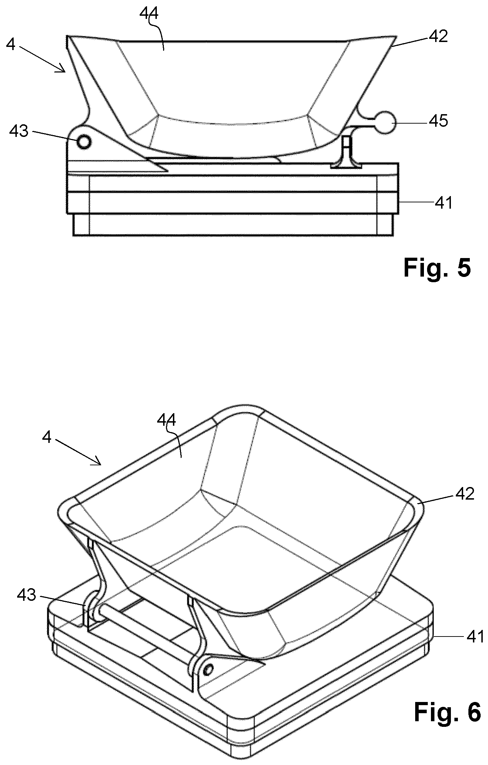

In the example of system 100, the containers 42 are tippers 44. In this case, the tippers 44 are joined in an articulated manner to the levitating bases 41 around an axis 43, all as illustrated in Figs. 5 and 6.

Other shapes or configurations than the one shown in the drawings are possible. For example, it is contemplated to mechanically link the tipper, or tippers, to the associated levitating base other than by means of an articulated joint. Any mechanical solution that allows the tipper to move with respect to the levitating base will be of interest in order to ensure its tipping and the dumping of articles contained in the article collector 3.

In other variants, it can be the entire conveyor element 4 that is tilted so that the associated container 42 dumps its content of articles. For example, a part of the table 55 can be a movable, rotatable portion, which when rotated causes the rotation of the conveyor element that levitates with respect to the area of the work surface 5 that defines this movable portion of the table. The movable portion of the table 55 can be the part that defines an unloading port and the container 42 can be fixed with respect to the associated levitating base.

In the example, the tippers 44 of the conveyor elements 4 of the system 100 are dimensioned, in relation to the unloading ports, so that the tippers 44 of more than one conveyor element 4 can be lines up and dump their contents at the same time into the collector 3, from the same unloading port.

The actuation of the tipper 44 or tippers of a conveyor element 4 from a conveyance position to a tipping position can be carried out by equipping the conveyor elements 4 with their own actuator means, for example and not exclusively, electrical or pneumatic means.

In the example system 100, however, the tippers 44 are actuated for their tipping by means of an external mechanism.

For this purpose, the unloading area 6c is equipped with two tipping mechanisms 8 each of which, by mechanical coupling with the tippers 44, is capable of ensuring the simultaneous tipping and confluence of the articles contained in the tippers 44 of the n conveyor elements 4 that are part of a combination and that, in the example, line up in an unloading port.

In order to produce the mechanical coupling, the tipping mechanisms 8 and the tippers 44 comprise complementary means of mutual coupling which, in the example, comprise a coupling protuberance 45 in the tippers 44 and in each tipping mechanism 8 a rail 81 oriented parallel to the work surface 5 and solidly attached to a rotating arm 82 about an axle 83, oriented parallel to said work surface 5. Each rotating arm 82 will be able to rotate, governed by the control unit 2, between at least two positions, one of which is a coupling position A, which arranges the rail 81 within reach of the coupling protuberances 45 of the tippers 44, being able to be inserted into the rail 81, through a first end 81a thereof, protuberances 45 of the tippers 44 of the n conveyor elements 4 aligned in the unloading port; and another one is a tipping position B, which tips the tippers 44 the coupling protuberance 45 of which is inserted into the rail 81, rotating them about their axles 43 for connection with the associated levitating bases 41. From the tipping position B, the rotating arms 82 can be rotated back to their coupling position A, to allow the uncoupling of the n conveyor elements 4 of the rail 81, if the alignment of same progresses in the direction of the second 81b end of the rail 81. The uncoupling or evacuation of a rail 81 will make it possible to receive a new alignment of n conveyor elements 4 for their unloading.

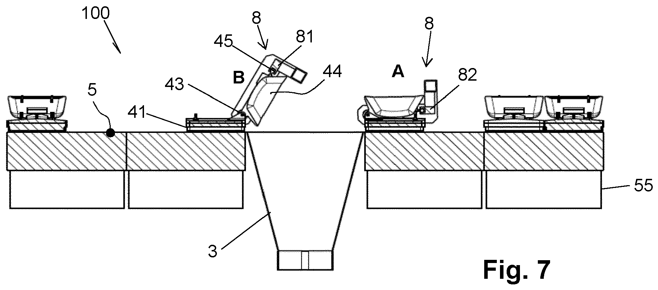

The detail in Fig. 7 shows the rails 81 of the tipping mechanisms 8, the rotating arm 82 of the rail 81 of the tipping mechanism 8, which is to the right of the image, adopting the coupling position A; and the rotating arm 82 of the rail 81 of the tipping mechanism 8 that is on the left of the image adopts the tipping position B.

Advantageously, the movement of the tippers 44 gives the articles a certain thrust that further improves the evacuation speed, that is, the dispensing speed, of the articles through the collector 3, for example, in comparison with the solutions in which the unloading of articles is produced by opening a gate or hatch at the bottom of a container.

One way of operating the system 100 according to the present invention is summarised below.

The conveyor elements 4 are actuated to move on the work surface 5 so that the cycle of a conveyor element 4 will comprise:
- Its displacement to make it circulate through the loading area 6a and arrange its tipper 44 under an article supply channel 12 to receive articles;
- Its displacement to the selection area 6b with its tipper 44 loaded with articles;
- The measurement of a weight value of the articles loaded in the tipper 44, either at the end of their loading, during their transit to the selection area 6b or during their stay in the selection area 6b;
- Its possible displacement within the selection area 6b to occupy a different cell of the matrix if it is deemed appropriate to reorganise the conveyor elements 4 in the selection area 6b as the conveyor elements 4 leave this selection area 6b, for being part of a combination, to go to the unloading area 6c and new conveyor elements 4 arrive at the selection area 6b from the loading area 6a freshly loaded with articles;
- Its displacement from the selection area 6b to an unloading port in the unloading area 6c, if its weight in articles is part of a combination of weights the sum of which coincides with a target weight, aligning at the unloading port along with the other at least n-1 conveyor elements 4 the weight in articles of which is part of the same combination, said displacement including a spin, or rotation about itself, movement, of 90° to arrange its coupling protuberance 45 so that it can be inserted into and coupled with the rail 81 of the tipping mechanism 8 of the unloading port;
- The tipping of its tipper 44, by actuation of the tipping mechanism 8;
- Its displacement to uncouple from the guide 81 of the tipping mechanism 8 following the same direction followed for its coupling; and
- Its displacement to go back to the loading area 6a to start a new cycle, in this case circulating along the side margins of the work surface 5 that are left in reserve to facilitate this circulation of conveyor elements from the unloading area 6c to the loading area 6a.

Naturally, other alternative movement schemes are possible to adjust to the production requirements of the system; to other arrangements and/or configurations of the supplier and/or collector; to a different number of N conveyor elements that are candidates for a combination; to a number other than n maximum conveyor elements for a combination; to a different shape of the conveyor surface; to the fact of combining conveyor elements of different sizes and/or with a different number of containers per conveyor element; the type or nature of the articles to be weighed, or any combination of the above.

As is known by the skilled person, in combination weighers, the average number of weighing units that is selected for a combination depends on the weigher model and the speed required.

The appropriate average number of weighing units is between 4 and 6 for traditional combination weighers that must execute less than 60 weighings per minute; and this average number is between 3 and 4 when they must execute more than 60 weighings per minute. If the average number of weighing units required to find a combination the value in weight of articles of which meets the target weight is outside of these ranges, the speed of the weigher will be affected.

A system 100 according to the invention is capable of operating, if required, with a higher average number of weighing units than that of traditional combination weighers without affecting speed, that is, without the number of weighing units per minute being affected. Just to give an example, the system 100 can be operated with an average number of selected weighing units greater than 4 to find a combination the value in weight of articles of which meets the target weight, the system 100 being able to carry out more than 60 weighings per minute.

A system 100 according to the invention is capable of operating with an average number of weighing units equal to that of a traditional combination weigher, outperforming it regarding speed.

In the example of the drawings, the system 100 will be able to operate to select up to n=4 conveyor elements 4 to come up with a combination the value in weight of articles of which meets a target weight, from a park of N=22 number of conveyor elements 4 in the selection area 6b, candidates to be part of the combination, which means a total of 7,315 possible combinations, when in a traditional combination multilevel weigher, which usually has a total fleet of 14 candidates (including weighing units and reserve drawers), the number of possible combinations is 1,001.

Naturally, in addition to performing combinatorial calculations on the basis of the measured article weight values to select a combination of conveyor elements the sum of the measured loaded article weight values of which matches a target weight, the control unit 2 may be programmed to carry out other calculations or to also take into account in combinatorial decisions other aspects than the weight of the articles, such as their size or the nature of certain articles. To give an example, a package may require, in addition to the weight of food articles meeting a target weight, that an accessory prize or article be introduced in the package. The control unit will know on which conveyor element 4 prize articles are located and, for example, how often a prize article must be dispensed into the package for these conditions to be part of the calculation logic.

Other advantages, not less important, of a system according to the invention are the following:
- The replacement of a weighing unit only requires changing one conveyor element for another, in an easy and simple way, since there are no mechanical links with other portions of the system and there are no reserve drawers that are fed from the weighing unit.
- For handling fragile articles, the system eliminates the jarring that articles are subjected to in traditional combination weighers when being vertically shuffled between, for example, preload drawers, weighing units, and reserve drawers.
- The height required for the collector to evacuate the articles to a container is significantly reduced, since the concentric arrangement of the weighing units that leads to the moving away of the weighing units that are part of a combination (or of the reserve drawers located one level below) is not required, distance which is required to maintain a minimum slope of the collector that it has such a vertical dimension that slows down the evacuation (and affects the preservation of fragile articles).
- Reduces operating noise, especially when the articles are bulk articles, such as nuts, in the absence of cascading drops between levels (preload drawers, weighing units, and reserve drawers) of the combination weigher.
- Easy cleaning and hygiene.
- Faster to obtain weight values.
- Ease of access to components or moving portions.
- Significant reduction in the space occupied by the system compared to that of a traditional combination weigher, especially with regard to its height dimension.
- Versatility, being able to increase or decrease the number of conveyor elements, and therefore weighing units, for the same table and without altering the operations carried out in the loading area and in the unloading area.
- The possible incorporation of intermediate work stations, to which the conveyor elements can go and/or stop during their movement; or the possible incorporation of auxiliary stations, such as a cleaning or sanitising station arranged in the path followed by the conveyor elements 4 from the unloading area 6c to the loading area 6a, by blowing, rinsing or the like.

## Claims

1. A method for gathering a number of articles with a target total weight, the method comprising supplying articles to a plurality of weighing units in order to obtain measured weight values in articles, performing combinatorial calculations on the basis of the measured weight values to select a combination of these measured weight values the sum of which coincides with the target weight; and gathering the articles of the weighing units the measured weight values of which are part of the combination, **characterised in that** the weighing units are conveyor elements movable by levitation with respect to a work surface, capable of following different trajectories between at least two areas of the work surface of which one is a loading area, in which the articles are supplied to the weighing units; and another is an unloading area, in which the weighing units that are part of the combination dump their content to at least one article collector.

2. A system (100) for gathering a number of articles with a target total weight, comprising a supplier (1) of articles to a plurality of weighing units to obtain measured weight values in articles; a control unit (2) programmed to perform combinatorial calculations on the basis of the measured weight values and to select a combination of these measured weight values the sum of which coincides with the target weight; and at least one collector (3) of the articles supplied to the weighing units the measured weight values of which are part of the combination, the system being **characterised in that** the weighing units are conveyor elements (4) that are movable by levitation with respect to a work surface (5), capable of following different trajectories between at least two areas of the work surface (5), of which one is a loading area (6a), in which the supplier (1) supplies the articles to the conveyor elements (4); and another is an unloading area (6c), in which the conveyor elements (4) that are part of the combination dump their content into at least one article collector (3).

3. The system according to claim 2, **characterised in that** the work surface (5) is a horizontal or substantially horizontal surface; and **in that** the conveyor elements (4) comprise a levitating base (41) and at least one container (42) carried by the levitating base and suitable for loading in it articles by the supplier (1) in the loading area (6a), the system (100) being provided with means for confluencing said articles in the at least one article collector (3) in the unloading area (6c).

4. The system according to claim 3, **characterised in that** the means for confluencing the articles comprise, in the unloading area (6c), a movable portion of work surface (5).

5. The system according to claim 3 or 4, **characterised in that** the at least one container (42) is a tipper (44).

6. The system according to claim 3, **characterised in that** the at least one container (42) is a tipper (44); and **in that** the means for confluencing the articles comprise, in the unloading area (6c), at least one tipping mechanism (8), which by means of mechanical coupling with tippers (44) is capable of ensuring its tipping and the confluence of the articles contained in them in the at least one article collector (3).

7. The system according to claim 6, **characterised in that** the tipping mechanism (8) and the tippers (44) comprise complementary means of mutual coupling, the tipping mechanism (8) being configured to be coupled to tippers (44) of more than one conveyor element (4) at the same time being thus capable of ensuring the tipping and confluence in the article collector (3) of the articles contained in the tippers (44) of more than one conveyor element (4).

8. The system according to claim 7, **characterised in that** the complementary means of mutual coupling comprise
- a coupling protuberance (45) in tippers (44),
- in the tipping mechanism (8), a rail (81) oriented parallel to the work surface (5) and solidly attached to a rotating arm (82) about an axle (83) oriented parallel to said work surface (5) between at least two positions, one of which is a coupling position A, which arranges the rail (81) within reach of the coupling protuberances (45) of the tippers (44) being able to be inserted into the rail (81), through a first end (81a) thereof, tipper coupling protuberances of more than one conveyor element that move above the work surface (5); and another is a tipping position B, which tips the tippers the protuberance of which is inserted into the rail.

9. The system according to any one of claims 2 to 8, **characterised in that** the work surface (5) comprises at least one unloading port, formed by an edge area of the work surface (5) in which several conveyor elements (4) that are part of a combination can be gathered and from which they can confluence the load of articles from their containers (42) to an article collector (3).

10. The system according to claim 9, **characterised in that** the edge area is an outer edge area, that is, of the outer perimeter or contour, of the work surface (5).

11. The system according to claim 9, **characterised in that** the edge area is an inner edge area, that is, of the perimeter or contour of an opening in the work surface (5).

12. The system according to any one of claims 2 to 11, **characterised in that** the at least one article collector (3) comprises a hopper.

13. The system according to any one of claims 2 to 12, **characterised in that** the work surface (5) comprises a selection area (6b), dimensioned for the spatial organisation, substantially coplanar, on this selection area (6b) of a number N of conveyor elements (4) greater than the number n of conveyor elements that are part of the combination, the control unit (2) being programmed to organise the transit of the conveyor elements (4) in a loop from the loading area (6a) to the selection area (6b); from the selection area (6b) to the unloading area (6c); and from the unloading area (6c) back to the loading area (6a).

14. The system according to claim 13, **characterised in that** the spatial organisation in the selection area (6b) is a matrix organisation in which waiting rows, the column positions of which can be occupied by conveyor elements (4) in waiting to be selected to be part of a combination; alternate with transit rows, to which conveyor elements (4) selected to be part of a combination and which were waiting located in rows adjacent to a transit row may first be transversely moved, to then move said selected conveyor elements (4) along said transit row, in the direction of the unloading area (6c).

15. A combination weigher comprising a system (100) according to any one of claims 2 to 14.

16. A use of conveyor elements (4) movable by levitation with respect to a substantially flat work surface (5) as weighing units in a combination weigher, said conveyor elements (4) movable by levitation being able to move between an article supplier (1) to the conveyor elements (4) and a collector (3) of articles supplied to the conveyor elements (4).

## Patentansprüche

1. Verfahren zum Sammeln einer Anzahl von Artikeln mit einem Zielgesamtgewicht, wobei das Verfahren das Zuführen von Artikeln zu einer Vielzahl von Wiegeeinheiten, um gemessene Gewichtswerte in Artikeln zu erhalten, das Durchführen von kombinatorischen Berechnungen basierend auf den gemessenen Gewichtswerten, um eine Kombination dieser gemessenen Gewichtswerte auszuwählen, deren Summe mit dem Zielgewicht übereinstimmt; und das Sammeln der Artikel der Wiegeeinheiten deren gemessenen Gewichtswerte Teil der Kombination sind, umfasst, **dadurch gekennzeichnet, dass** die Wiegeeinheiten Förderelemente sind, welche sich durch Schweben in Bezug auf eine Arbeitsfläche bewegen können, welche in der Lage sind, unterschiedliche Wege zwischen mindestens zwei Bereichen der Arbeitsfläche zu folgen, wobei einer davon ein Ladebereich ist, in welchem die Artikel zu den Wiegeeinheiten zugeführt werden; und ein anderer davon ein Entladebereich ist, in welchem die Wiegeeinheiten, welche Teil der Kombination sind, deren Inhalt in mindestens einen Artikelauffänger schütten.

2. System (100) zum Sammeln einer Anzahl von Artikeln mit einem Zielgesamtgewicht, umfassend eine Zuführungseinrichtung (1) von Artikeln zu einer Vielzahl von Wiegeeinheiten, um gemessene Gewichtswerte in Artikeln zu erhalten; eine Steuereinheit (2), welche dafür programmiert ist, kombinatorische Berechnungen basierend auf den gemessenen Gewichtswerten durchzuführen und eine Kombination dieser gemessenen Gewichtswerte auszuwählen, deren Summe mit dem Zielgewicht übereinstimmt; und mindestens einen Auffänger (3) der zu den Wiegeeinheiten zugeführten Artikel, deren gemessenen Gewichtswerte Teil der Kombination sind, wobei das System **dadurch gekennzeichnet ist, dass** die Wiegeeinheiten Förderelemente (4) sind, welche sich durch Schweben in Bezug auf eine Arbeitsfläche (5) bewegen können, welche in der Lage sind, unterschiedliche Wege zwischen mindestens zwei Bereichen der Arbeitsfläche (5) zu folgen, wobei einer davon ein Ladebereich (6a) ist, in welchem die Zuführungseinrichtung (1) die Artikel zu den Förderelementen (4) zuführt; und ein anderer davon ein Entladebereich (6c) ist, in welchem die Förderelemente (4), welche Teil der Kombination sind, deren Inhalt in mindestens einen Artikelauffänger (3) schütten.

3. System nach Anspruch 2, **dadurch gekennzeichnet, dass** die Arbeitsfläche (5) eine horizontale oder im Wesentlichen horizontale Oberfläche ist; und dass die Förderelemente (4) eine schwebende Basis (41) und mindestens einen Behälter (42), welcher von der schwebenden Basis getragen wird und zum darin Laden von Artikeln mittels der Zuführungseinrichtung (1) im Ladebereich (6a) geeignet ist, umfassen, wobei das System (100) mit Mitteln zum Zusammenführen der genannten Artikel in den mindestens einen Artikelauffänger (3) im Entladebereich (6c) versehen ist.

4. System nach Anspruch 3, **dadurch gekennzeichnet, dass** die Mittel zum Zusammenführen der Artikel, im Entladebereich (6c), einen beweglichen Abschnitt der Arbeitsfläche (5) umfassen.

5. System nach Anspruch 3 oder 4, **dadurch gekennzeichnet, dass** der mindestens eine Behälter (42) ein Kippwagen (44) ist.

6. System nach Anspruch 3, **dadurch gekennzeichnet, dass** der mindestens eine Behälter (42) ein Kippwagen (44) ist; und dass die Mittel zum Zusammenführen der Artikel, im Entladebereich (6c), mindestens einen Kippmechanismus (8) umfassen, welcher mittels der mechanischen Kopplung mit Kippwagen (44) in der Lage ist, deren Kippen und das Zusammenführen der darin enthaltenen Artikel in den mindestens einen Artikelauffänger (3) zu gewährleisten.

7. System nach Anspruch 6, **dadurch gekennzeichnet, dass** der Kippmechanismus (8) und die Kippwagen (44) komplementäre Mittel zur gegenseitigen Kopplung umfassen, wobei der Kippmechanismus (8) dazu ausgebildet ist, mit Kippwagen (44) von mehr als einem Förderelement (4) gekoppelt zu werden, wobei es gleichzeitig in der Lage ist, das Kippen und das Zusammenführen in den Artikelauffänger (3) der in den Kippwagen (44) von mehr als einem Förderelement (4) enthaltenen Artikel zu gewährleisten.

8. System nach Anspruch 7, **dadurch gekennzeichnet, dass** die komplementären Mittel zur gegenseitigen Kopplung Folgendes umfassen:
- einen Kopplungsvorsprung (45) in den Kippwagen (44),
- im Kippmechanismus (8), eine Schiene (81), welche parallel zur Arbeitsfläche (5) orientiert ist und an einem Dreharm (82) fest befestigt ist, welcher sich um eine Achse (83), welche parallel zur genannten Arbeitsfläche (5) orientiert ist, zwischen mindestens zwei Stellungen herum drehen kann, wobei eine davon eine Kopplungsstellung A ist, welche die Schiene (81) in Reichweite der Kopplungsvorsprünge (45) der Kippwagen (44) anordnet, sodass sie in der Lage sind, in die Schiene (81) eingeführt zu werden, über ein erstes Ende (81a) derselben, Kopplungsvorsprünge der Kippwagen von mehr als einem Förderelement, welche sich über der Arbeitsfläche (5) bewegen; und eine andere davon eine Kippstellung B ist, welche die Kippwagen, deren Vorsprung in die Schiene eingeführt ist, kippt.

9. System nach einem der Ansprüche 2 bis 8, **dadurch gekennzeichnet, dass** die Arbeitsfläche (5) mindestens eine Entladeöffnung umfasst, welche durch einen Randbereich der Arbeitsfläche (5) gebildet ist, in welcher mehrere Förderelemente (4), welche Teil einer Kombination sind, gesammelt werden können und von welcher sie die Ladung von Artikeln von deren Behältern (42) zu einem Artikelauffänger (3) zusammenführen.

10. System nach Anspruch 9, **dadurch gekennzeichnet, dass** der Randbereich ein äußerer Randbereich ist, das heißt, des Außenumfangs oder der Außenkontur, der Arbeitsfläche (5).

11. System nach Anspruch 9, **dadurch gekennzeichnet, dass** der Randbereich ein innerer Randbereich ist, das heißt, des Umfangs oder der Kontur einer Öffnung in der Arbeitsfläche (5).

12. System nach einem der Ansprüche 2 bis 11, **dadurch gekennzeichnet, dass** der mindestens eine Artikelauffänger (3) einen Trichter umfasst.

13. System nach einem der Ansprüche 2 bis 12, **dadurch gekennzeichnet, dass** die Arbeitsfläche (5) einen Auswahlbereich (6b) umfasst, welcher für die räumliche Organisierung, im Wesentlichen komplanar, auf diesem Auswahlbereich (6b) einer Anzahl N von Förderelementen (4) größer als die Anzahl n von Förderelementen, welche Teil der Kombination sind, dimensioniert ist, wobei die Steuereinheit (2) dafür programmiert ist, den Durchgang der Förderelemente (4) in einem Zyklus vom Ladebereich (6a) zum Auswahlbereich (6b); vom Auswahlbereich (6b) zum Entladebereich (6c); und vom Entladebereich (6c) zurück zum Ladebereich (6a) zu organisieren.

14. System nach Anspruch 13, **dadurch gekennzeichnet, dass** die räumliche Organisierung im Auswahlbereich (6b) eine Matrixorganisierung ist, in welcher sich Wartereihen, deren Spaltstellungen von Förderelementen (4) besetzt werden können, welche darauf warten, als Teil einer Kombination ausgewählt zu werden, mit Durchgangsreihen abwechseln, zu welchen sich zuerst Förderelemente (4), welche als Teil einer Kombination ausgewählt werden und welche sich in Reihen einer Durchgangsreihe benachbart befindend warteten, quer bewegen können, um dann die genannten ausgewählten Förderelemente (4) entlang der genannten Durchgangsreihe, in Richtung des Entladebereichs (6c), zu bewegen.

15. Kombinationswiegeeinrichtung umfassend ein System (100) nach einem der Ansprüche 2 bis 14.

16. Verwendung von Förderelementen (4), welche sich durch Schweben in Bezug auf eine im Wesentlichen flache Arbeitsfläche (5) als Wiegeeinheiten in einer Kombinationswiegeeinrichtung bewegen können, wobei die genannten Förderelemente (4), welche sich durch Schweben bewegen können, in der Lage sind sich zwischen einer Artikelzuführungseinrichtung (1) zu den Förderelementen (4) und einem Auffänger (3) der Artikel, welche zu den Förderelementen (4) zugeführt werden, zu bewegen.

## Revendications

1. Procédé pour rassembler un certain nombre d'articles avec un poids total cible, le procédé comprenant fournir des articles à une pluralité d'unités de pesage afin d'obtenir des valeurs de poids mesurées dans des articles, réaliser des calculs combinatoires sur la base des valeurs de poids mesurées pour choisir une combinaison de ces valeurs de poids mesurées dont la somme coïncide avec le poids cible; et rassembler les articles des unités de pesage dont les valeurs de poids mesurées font partie de la combinaison, **caractérisé en ce que** les unités de pesage sont des éléments de convoyeur mobiles par lévitation par rapport à une surface de travail, capables de suivre différentes trajectoires entre au moins deux zones de la surface de travail l'une desquelles est une zone de chargement, dans laquelle les articles sont fournis aux unités de pesage; et l'autre est une zone de déchargement, dans laquelle les unités de pesage qui font partie de la combinaison vident leur contenu dans au moins un collecteur d'articles.

2. Système (100) pour rassembler un certain nombre d'articles avec un poids total cible, comprenant un fournisseur (1) d'articles à une pluralité d'unités de pesage pour obtenir des valeurs de poids mesurées dans des articles; une unité de contrôle (2) programmée pour réaliser des calculs combinatoires sur la base des valeurs de poids mesurées et pour choisir une combinaison de ces valeurs de poids mesurées dont la somme coïncide avec le poids cible; et au moins un collecteur (3) des articles fournis aux unités de pesage dont les valeurs de poids mesurées font partie de la combinaison, le système étant **caractérisé en ce que** les unités de pesage sont des éléments de convoyeur (4) qui sont mobiles par lévitation par rapport à une surface de travail (5), capables de suivre différentes trajectoires entre au moins deux zones de la surface de travail (5), l'une desquelles est une zone de chargement (6a), dans laquelle le fournisseur (1) fournit les articles aux éléments de convoyeur (4); et l'autre est une zone de déchargement (6c), dans laquelle les éléments de convoyeur (4) qui font partie de la combinaison vident leur contenu dans au moins un collecteur d'articles (3).

3. Système selon la revendication 2, **caractérisé en ce que** la surface de travail (5) est une surface horizontale ou sensiblement horizontale; et **en ce que** les éléments de convoyeur (4) comprennent une base de lévitation (41) et au moins un récipient (42) porté par la base de lévitation et approprié pour charger des articles dans celui-ci par le fournisseur (1) dans la zone de chargement (6a), le système (100) étant pourvu de moyens pour la confluence desdits articles dans l'au moins un collecteur d'articles (3) dans la zone de déchargement (6c).

4. Système selon la revendication 3, **caractérisé en ce que** les moyens pour la confluence des articles comprennent, dans la zone de déchargement (6c), une portion mobile de la surface de travail (5).

5. Système selon la revendication 3 ou 4, **caractérisé en ce que** l'au moins un récipient (42) est un basculeur (44).

6. Système selon la revendication 3, **caractérisé en ce que** l'au moins un récipient (42) est un basculeur (44); et **en ce que** les moyens pour la confluence des articles comprennent, dans la zone de déchargement (6c), au moins un mécanisme de basculement (8), lequel, par le biais d'un couplage mécanique avec les basculeurs (44), est capable d'assurer son basculement et la confluence des articles contenus dans ceux-ci dans l'au moins un collecteur d'articles (3).

7. Système selon la revendication 6, **caractérisé en ce que** le mécanisme de basculement (8) et les basculeurs (44) comprennent des moyens complémentaires pour le couplage mutuel, le mécanisme de basculement (8) étant configuré pour être couplé aux basculeurs (44) de plus d'un élément de convoyeur (4) étant capable ainsi en même temps d'assurer le basculement et la confluence dans l'collecteur d'articles (3) des articles contenus dans les basculeurs (44) de plus d'un élément de convoyeur (4).

8. Système selon la revendication 7, **caractérisé en ce que** les moyens complémentaires de couplage mutuel comprennent
- une protubérance de couplage (45) dans les basculeurs (44),
- dans le mécanisme de basculement (8), un rail (81) orienté parallèlement à la surface de travail (5) et attaché de manière solidaire à un bras rotatif (82) autour d'un axe (83) orienté parallèlement à ladite surface de travail (5) entre au moins deux positions, l'une desquelles est une position de couplage A, qui dispose le rail (81) à portée des protubérances de couplage (45) des basculeurs (44) pouvant être insérées dans le rail (81), à travers une première extrémité (81a) de celui-ci, des protubérances de couplage de basculeur de plus d'un élément de convoyeur qui se déplacent au-dessus de la surface de travail (5); et l'autre est une position de basculement B, qui fait basculer les basculeurs dont la protubérance est insérée dans le rail.

9. Système selon l'une quelconque des revendications 2 à 8, **caractérisé en ce que** la surface de travail (5) comprend au moins un orifice de déchargement, formé par une zone de bord de la surface de travail (5) dans laquelle plusieurs éléments de convoyeur (4) qui font partie d'une combinaison peuvent se rassembler et à partir de laquelle ils peuvent provoquer la confluence de la charge d'articles à partir de leurs récipients (42) jusqu'à un collecteur d'articles (3).

10. Système selon la revendication 9, **caractérisé en ce que** la zone de bord est une zone de bord externe, c'est-à-dire, du périmètre ou contour externe, de la surface de travail (5).

11. Système selon la revendication 9, **caractérisé en ce que** la zone de bord est une zone de bord interne, c'est-à-dire, du périmètre ou contour d'une ouverture dans la surface de travail (5).

12. Système selon l'une quelconque des revendications 2 à 11, **caractérisé en ce que** l'au moins un collecteur d'articles (3) comprend une trémie.

13. Système selon l'une quelconque des revendications 2 à 12, **caractérisé en ce que** la surface de travail (5) comprend une zone de sélection (6b), dimensionnée pour l'organisation spatiale, sensiblement coplanaire, sur cette zone de sélection (6b) d'un certain nombre N d'éléments de convoyeur (4) supérieur au nombre n d'éléments de convoyeur qui font partie de la combinaison, l'unité de contrôle (2) étant programmée pour organiser le transit des éléments de convoyeur (4) dans un boucle à partir de la zone de chargement (6a) jusqu'à la zone de sélection (6b); à partir de la zone de sélection (6b) jusqu'à la zone de déchargement (6c); et partir de la zone de déchargement (6c) de nouveau jusqu'à la zone de chargement (6a).

14. Système selon la revendication 13, **caractérisé en ce que** l'organisation spatiale dans la zone de sélection (6b) est une organisation en matrice dans laquelle des rangées d'attente, dont les positions de colonne peuvent être occupées par des éléments de convoyeur (4) en attente d'être choisis pour faire partie d'une combinaison; alternantes avec des rangées de transit, auxquelles des éléments de convoyeur (4) choisis pour faire partie d'une combinaison et qui étaient en attente placés dans des rangées adjacentes à une rangée de transit peuvent d'abord être déplaces transversalement, pour ensuite déplacer lesdits éléments de convoyeur (4) choisis le long de ladite rangée de transit, dans la direction vers la zone de déchargement (6c).

15. Dispositif de pesage de combinaison comprenant un système (100) selon l'une quelconque des revendications 2 à 14.

16. Utilisation d'éléments de convoyeur (4) mobiles par lévitation par rapport à une surface de travail (5) sensiblement plate en tant qu'unités de pesage dans un dispositif de pesage de combinaison, lesdits éléments de convoyeur (4) mobiles par lévitation pouvant se déplacer entre un fournisseur d'articles (1) aux éléments de convoyeur (4) et un collecteur (3) d'articles fournis aux éléments de convoyeur (4).
